# EUROPÄISCHE PATENTSCHRIFT

(11) **EP 2 673 104 B1**
(45) Veröffentlichungstag und Bekanntmachung des Hinweises auf die Patenterteilung: **05.04.2017**
(21) Anmeldenummer: 12712892.4
(22) Anmeldetag: 30.01.2012
(51) Int. Cl.: B23K 9/133, B21F 23/00, B65H 51/14

(54) **DRAHTVORSCHUBSYSTEM MIT ALS TRANSPORT-KETTE AUSGEBILDETEM TRANSPORTMITTEL UND MIT QUADERFÖRMIGEN DRUCKKÖRPERN**
WIRE-ADVANCEMENT SYSTEM HAVING TRANSPORTING MEANS DESIGNED AS A TRANSPORTING CHAIN AND HAVING CUBOIDAL PRESSURE-EXERTING BODIES
SYSTÈME D'AVANCE DE FIL COMPRENANT UN MOYEN DE TRANSPORT SOUS FORME DE CHAÎNE DE TRANSPORT, AINSI QUE DES CORPS DE COMPRESSION EN FORME DE PARALLÉLÉPIPÈDES

(30) Priorität: 10.02.2011 DE 102011010949
(43) Veröffentlichungstag der Anmeldung: 18.12.2013
(73) Patentinhaber: WSM Weber Schweissmaschinen GmbH, 35418 Grossen-Buseck (DE)
(72) Erfinder: WEBER, Karl Martin, 35582 Wetzlar (DE)
(74) Vertreter: Stamer, Harald
(86) Internationale Anmeldenummer: PCT/DE2012/000077
(87) Internationale Veröffentlichungsnummer: WO 2012/107021

(56) Entgegenhaltungen:
- EP-A1- 0 320 397
- DE-B- 1 059 644
- JP-A- 11 199 133
- US-A- 2 133 970
- US-B1- 6 199 829
- US-B1- 6 450 386

## Beschreibung

Die Erfindung betrifft ein Drahtvorschubsystem mit den Merkmalen des Oberbegriffs des Anspruchs 1 (siehe, z.B., US 6 199 829 A). Aus DD 250 517 A1 ist eine Drahtvorschubeinrichtung zum Transport von Drähten für thermische Spritz- oder Schweißanlagen bekannt.

Die bekannte Drahtvorschubeinrichtung ist zum gleichmäßigen Transport von unterschiedlichen Drähten für unterschiedliche Anwendungen mit unterschiedlichen Vorschubgeschwindigkeiten vorgesehen. Der Transportmechanismus besteht jeweils aus drei Hauptelementen, und zwar einen Transportelement, einem Druckelement und einem Stellelement zur Erzeugung unterschiedlicher Vorschubgeschwindigkeiten. Als Transportelemente werden entweder kegelstumpfförmige Transportrollen verwendet, die mit kegelstumpfförmigen Druckrollen als Druckelement kombiniert sind, oder es werden profilierte Transport-Riemen oder -Ketten eingesetzt, die mit zylindrischen Druckrollen kombiniert sind, in deren umlaufende Zylinderfläche Drahtführungsnuten eingefräst sind. Zwischen Transportelement und Druckelement wird der Draht transportiert.

Eine weitere bekannte Einrichtung besteht aus zylindrischen Drahtvorschubrollen mit einer in die Zylinderfläche eingefrästen umlaufenden Drahtführungsnut und zylindrischen Druckrollen. Die zylindrischen Druckrollen sind in einem Führungsteil gelagert, mit dem sie an die Drahtvorschubrollen gedrückt werden. Verstellbare Druckfedern in dem Führungsteil ermöglichen die Verwendung von verschiedenen Drahtdurchmessem und gewährleisten einen ausreichenden Anpressdruck des Drahtes an die Führungsnuten in den Drahtvorschubrollen. Die Berührungsflächen der Druckrollen und Druckvorschubrollen mit dem Draht sind punktförmig.

Die Anwendung profilierter Transport-Riemen oder -Ketten kombiniert mit zylindrischen Druckrollen ermöglicht eine stufenlose Änderung der Vorschubgeschwindigkeit. Dazu wird das Transportelement auf zwei Kegelrollenpaaren gelagert und von diesen angetrieben. Durch eine Stelleinheit können die Kegelrollenpaare jedes für sich axial gegeneinander verschoben werden. Dadurch gelangen der profilierte Transport-Riemen oder die -Kette auf einen größeren oder kleineren Radius des Kegelrollenpaares. Damit ändert sich die Geschwindigkeit des Transportelementes und gleichzeitig die Geschwindigkeit des durch die zylindrische Druckrolle angedrückten Drahtes. Die Druckrichtung der Druckrolle ist parallel zur Laufrichtung des Transport-Riemens oder der -Kette ausgerichtet. Auch bei dieser Anordnung entstehen wieder punktförmige Andruckflächen.

Für einen schlupffreien Drahtvorschub müssen relativ hohe Andruckkräfte erzeugt werden, die bei punktförmigen Andruckflächen zu einer Verformung des Drahtquerschnittes führen, die in der Führungsnut an deren Form anpasst ist und an der zylindrischen Andruckrolle zu einer Abflachung führt. Dieser Effekt tritt insbesondere bei weichen Drähten aus Alu, Bronze oder bei Fülldrähten auf und ist bei der Einführung und Durchführung des Drahtes durch Spritz- oder Schweißdüsen hinderlich. Bei mehreren hintereinander angeordneten Transporteinrichtungen führt die Verformung des Querschnitts zu veränderten Andruckverhältnissen und verschlechtert einen gleichmäßigen Vorschub.

Bei schnellen Beschleunigungen des Drahtes kommt es häufig zum Schlupf zwischen Draht und Transporteinrichtung, so dass weniger Draht gefördert wird als vorgegeben. Das ist für das genaue Schweißen, speziell mit Pulsanlagen, nachteilig für den Lichtbogen, wie eine ungenaue Drahtförderung zu Lichtbogenfehlern und damit Schweißfehlern führt.

Bei nicht exakt parallel zueinander ausgerichteten Flächen der Druck- und Transportzylinder werden insbesondere Flachdrähte durch einen eingleichen Anpressdruck an einer Seite mehr verformt als auf der anderen Seite. Damit kommt der Draht im Bogen aus dem Vorschub, wodurch die Weiterführung in die Schweißvorrichtung behindert wird.

Die durch Schlupf entstehende ungleichmäßige Drahtförderung erzeugt zusätzlich einen Abrieb am Draht, der die Druck- und Transportrollen verschleißt.

Schnell reversierende Vorschübe mit Drahtrückzug für spezielle Schweißverfahren ergeben bei den bekannten Einrichtungen große Förderungenauigkeiten, so dass ein reversierender Pulsbetrieb nahezu unmöglich ist.

Der Erfindung lag daher die Aufgabe zugrunde, ein Drahtvorschubsystem anzugeben, das die beschriebenen Nachteile nicht aufweist.

Diese Aufgabe wird bei einem Drahtvorschubsystem der eingangs genannten Art erfindungsgemäß durch die kennzeichnenden Merkmale des Anspruchs 1 gelöst. Vorteilhafte Weiterbildungen ergeben sich aus den Merkmalen der Unteransprüche.

Die quaderförmigen Druckkörper der Transport- und Dreckelemente ermöglichen eine große Auflagefläche der Drähte zwischen den umlaufenden Transport- Ketten. Die Druckbelastung der Drähte kann so klein gehalten werden, dass selbst weiche Drähte nicht verformt werden. Durch die große Auflagefläche entsteht kein Schlupf. Förderungsungenauigkeiten entstehen daher nicht. Der parallele Andruck zwischen den ebenen Flächen der Druckkörper ist insbesondere für die Förderung von Flachdrähten optimal. Da kein Schlupf entsteht, erfolgt auch kein Abrieb, und zwar weder am Draht noch an der Transport-Kette. Das bedeutet insbesondere, dass eine häufig vorhandene Kupferbeschichtung am Draht nicht beschädigt wird. Der fehlende Schlupf macht das erfindungsgemäße Drahtvorschubsystem ideal geeignet für schnell reversierende Bewegungen des Drahtes mit genauer Förderung ohne schlupfbedingte Längenänderungen des Drahtes.

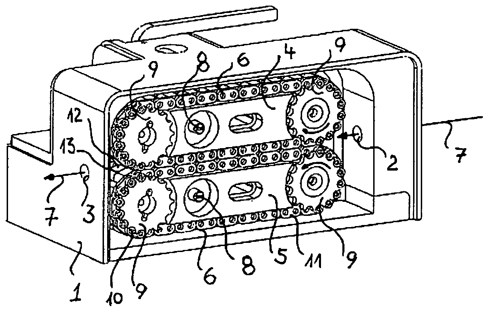

In der Zeichnung ist ein Ausführungsbeispiel schematisch dargestellt und wird anhand der Zeichnung nachfolgend beschrieben.

Das in der Zeichnung dargestellte Drahtvorschubsystem besteht aus einem in der Zeichnung einseitig offen dargestellten Vorschubgehäuse 1 mit einer Drahteinführungsöffnung 2 und einer Drahtvorschuböffnung 3. In dem Vorschubgehäuse 1 sind einander gegenüber liegende quaderförmige Druckkörper 4, 5 angeordnet, die von Transportketten 6 umlaufen werden. Die zwischen den Druckkörpern 4, 5 laufenden Transportketten 6 transportieren den Draht 7.

Die Druckkörper 4, 5 sind in dem Vorschubgehäuse 1 gemäß der Erfindung so gelagert, dass sie gegeneinander federnd spannbar sind, um den Draht 7 sicher zu transportieren. Dazu kann der untere Druckkörper 5 feststehend sind und der obere Druckkörper 4 in einer Führung unter Federdruck gelagert sein. Der Federdruck kann einstellbar sein, Die Spannung der Transportketten 6 kann über Stellschrauben 8 einstellbar sein, so dass die Transportketten 6 fest auf den nicht weiter dargestellten Umlenkwalzen in Laufrichtung vor und hinter den Druckkörpern 4, 5 aufliegen.

Mit den Umlenkwalzen gekoppelt oder in diesen drehbar gelagert sind Zahnkränze 9, die mit Zapfen 10 an den Kettengliedern 11 im Eingriff stehen. Die Zapfen 10 sind aus Gründen der Übersicht nur im Bereich der Zahnkränze 9 dargestellt. Die Kettenglieder 11 weisen gemäß der Erfindung ebene Transportflächen 12 auf, in die in Laufrichtung Führungsnuten 13 für den zu transportierenden Draht 7 vorhanden sind. Die Führungsnuten 13 sorgen für einen gerade gerichteten Transport des Drahtes 7 von der Drahteinführungsöffnung 2 bis zur Drahtvorschuböffnung 3 heraus. Zum Antrieb der Transportketten 6 über die Zahnkränze 9 sind nicht weiter dargestellte elektrische Synchronmotoren oder Schrittmotoren in dem Vorschubgehäuse 1 vorhanden. Beim Antrieb beider Transportketten 6 über getrennte Motoren ist auf einen sehr guten Gleichlauf zu achten, insbesondere in der Steuerung des Vor- und Rücklaufs bei einem reversierenden Drahtvorschub.

### Bezugszeichenliste

- 1: Vorschubgehäuse
- 2: Drahteinführungsöffnung
- 3: Drahtvorschuböffnung
- 4,5: quaderförmige Druckkörper
- 6: Transportketten
- 7: Draht
- 8: Stellschrauben Kettenspannung
- 9: Zahnkränze
- 10: Zapfen an Kettengliedern
- 11: Kettenglied
- 12: ebene Transportflächen
- 13: Führungsnuten

## Patentansprüche

1. Drahtvorschubsystem mit einem Druckelement und einem Transportelement, zwischen denen der Draht transportiert wird und mit mindestens einer Antriebseinheit, wobei das Transportelement als Transport-Kette ausgebildet ist**, dadurch gekennzeichnet, dass** Transportelement und das Druckelement jeweils aus einander gegenüberliegenden quaderförmigen Druckkörpern (4,5) mit ebenen Andruckflächen bestehen, wobei die Transport-Elemente der Transport-Ketten (6) die Druckkörper (4,5) umlaufen wobei die Transport-Ketten (6) ebene Transportflächen (12) der Kettenglieder (11) aufweisen und die Druckkörper (4, 5) gegeneinander federnd spannbar sind

2. Drahtvorschubsystem nach Anspruch 1, **dadurch gekennzeichnet, dass** in Laufrichtung vor und hinter den Druckkörpern (4, 5) Umlenkwalzen zum Antrieb der Transport-Riemen oder Transport-Ketten (6) angeordnet sind.

3. Drahtvorschubsystem nach Anspruch 2, **dadurch gekennzeichnet, dass** die Umlenkwalzen mit Zahnkränzen (9) zum Eingriff in die Kettenglieder (11) ausgestattet sind.

4. Drahtvorschubsystem nach Anspruch 2, **dadurch gekennzeichnet, dass** zum Antrieb der Umlenkwalzen Synchronmotoren vorhanden sind.

5. Drahtvorschubsystem nach Anspruch 2, **dadurch gekennzeichnet, dass** zum Antrieb der Umlenkwalzen Schrittmotoren vorhanden sind.

6. Drahtvorschubsystem nach Anspruch 1, **dadurch gekennzeichnet, dass** in Laufrichtung in den Transportflächen (12) der Kettenglieder (11) Führungsnuten (13) für den Draht (7) vorhanden sind.

## Claims

1. Wire-advancement system having a pressure-exerting element and a transporting element, between which the wire is transported, and having at least one drive unit, wherein the transporting element is designed in the form of a transporting chain, **characterized in that** the transporting element and the pressure-exerting element each comprise cuboidal pressure-exerting bodies (4, 5) which have planar pressure-exerting surfaces and are located opposite one another, wherein the transporting elements of the transporting chains (6) run around the pressure-exerting bodies (4, 5), wherein the transporting chains (6) have planar transporting surfaces (12) on the chain links (11) and the pressure-exerting bodies (4, 5) can be braced resiliently against one another.

2. Wire-advancement system according to Claim 1, **characterized in that** deflecting rollers for driving the transporting belts or transporting chains (6) are arranged upstream and downstream of the pressure-exerting bodies (4, 5), as seen in the running direction.

3. Wire-advancement system according to Claim 2, **characterized in that** the deflecting rollers are provided with toothed rims (9) for engagement in the chain links (11).

4. Wire-advancement system according to Claim 2, **characterized in that** synchronous motors are present for driving the deflecting rollers.

5. Wire-advancement system according to Claim 2, **characterized in that** stepping motors are present for driving the deflecting rollers.

6. Wire-advancement system according to Claim 1, **characterized in that** guide grooves (13) for the wire (7) are present in the running direction in the transporting surfaces (12) of the chain links (11).

## Revendications

1. Système d'avance de fil avec un élément de compression et un élément de transport entre lesquels le fil est transporté et avec au moins une unité d'entraînement, l'élément de transport étant réalisé sous la forme d'une chaîne de transport, **caractérisé en ce que** l'élément de transport et l'élément de compression se composent respectivement de corps de compression (4, 5) opposés entre eux en forme de parallélépipède, avec des surfaces de compression planes, les éléments de transport des chaînes de transport (6) entourant les corps de compression (4, 5), les chaînes de transport (6) comportant des surfaces de transport (12) planes des maillons de chaîne (11) et les corps de compression (4, 5) pouvant être tendus l'un contre l'autre à la façon d'un ressort.

2. Système d'avance de fil selon la revendication 1, **caractérisé en ce que** dans la direction d'avancée, des rouleaux de déviation sont disposés devant et derrière les corps de compression (4, 5) pour entraîner la courroie de transport ou les chaînes de transport (6).

3. Système d'avance de fil selon la revendication 2, **caractérisé en ce que** les rouleaux de déviation sont équipés de couronnes dentées (9) pour s'engrener dans les maillons de chaîne (11).

4. Système d'avance de fil selon la revendication 2, **caractérisé en ce que** des moteurs synchrones sont présents pour entraîner les rouleaux de déviation.

5. Système d'avance de fil selon la revendication 2, **caractérisé en ce que** des moteurs pas-à-pas sont présents pour entraîner les rouleaux de déviation.

6. Système d'avance de fil selon la revendication 1, **caractérisé en ce que** des rainures de guidage (13) prévues pour le fil (7) sont présentes dans la direction d'avance, dans les surfaces de transport (12) des maillons de chaîne (11).
